# EUROPÄISCHE PATENTSCHRIFT

(11) **EP 1 236 391 B1**
(45) Veröffentlichungstag und Bekanntmachung des Hinweises auf die Patenterteilung: **07.09.2005**
(21) Anmeldenummer: 02004156.2
(22) Anmeldetag: 26.02.2002
(51) Int. Cl.: A01F 7/06

(54) **Gutbearbeitungseinheit für einen Mähdrescher**
Device for the treatment of crop for a combine
Unité de traitement de récolte pour moissonneuse-batteuse

(30) Priorität: 02.03.2001 US 798082
(43) Veröffentlichungstag der Anmeldung: 04.09.2002
(73) Patentinhaber: DEERE & COMPANY, Illinois 61265-8098 (US)
(72) Erfinder: Moriarty, Kevin Joseph, Davenport, IA 52803 (US)
(74) Vertreter: Holst, Sönke

(56) Entgegenhaltungen:
- EP-A- 0 631 716
- WO-A-97/07660
- DE-A- 1 941 248
- DE-A- 19 722 079
- FR-A- 2 552 301
- FR-A- 2 653 968
- US-A- 4 274 426

## Beschreibung

Die Erfindung betrifft eine Gutbearbeitungseinheit für einen Mähdrescher, mit einem um eine Rotorachse drehbar gelagerten Rotor, der innerhalb eines Rotorgehäuses angeordnet ist, wobei zwischen dem Rotorgehäuse und dem Rotor ein ringförmiger Raum vorhanden ist, durch den Gut in einer Gutflussrichtung von einem einlassseitigen Ende des Rotorgehäuses zu einem auslassseitige Ende des Rotorgehäuses stömen kann und das Rotorgehäuse etwa kegelstumpfförmig ist und eine Oberseite aufweist, die in der Gutflussrichtung von der Unterseite des Rotorgehäuses divergiert.

Mit Rotoren ausgestattete Mähdrescher sind bekannt. Beispiele sind in der US 5 445 563 A und der US 5 688 170 A gezeigt. Diese Patentschriften offenbaren jeweils mit Rotoren ausgestattete Gutbearbeitungseinheiten mit zwei oder mehr Abschnitten. Die räumliche Beziehung zwischen der Rotorachse und der Gehäuseachse ist in den einzelnen Abschnitten unterschiedlich. Bei beiden Druckschriften entfernt sich die Rotorachse in der Gutflussrichtung vom Gehäuseeinlass zum Gehäuseauslass immer weiter von der Gehäuseachse. Das wird durch abrupte Übergänge in der Gehäusestruktur zwischen den Abschnitten erreicht, an denen sich die Gehäuseform ändert. Dort, wo sich die Gehäuseform ändert, macht die Gehäuseachse gegenüber der Rotorachse einen Schritt nach oben und der Spalt zwischen dem Rotor und der Oberseite des Gehäuse vergrößert sich bei jedem Schritt im Gehäuse.

In der EP (Case ..., Moriarty) sind sowohl der Rotor als auch das Gehäuse im Wesentlichen zylindrisch und derart angeordnet, dass ihre Achsen im Einlass fast konzentrisch sind und in der Gutflussrichtung divergieren, wobei die Gehäuseachse von der Rotorachse in Gutflussrichtung nach oben divergiert, um ein allmähliches Ansteigen des Spalts zwischen dem Rotor und der Oberseite des Gehäuses in der Gutflussrichtung zu erzielen.

Das der Erfindung zugrunde liegende Problem wird darin gesehen, eine andere Anordnung einer Gutbearbeitungseinheit vorzuschlagen, bei der sich ein anwachsender Zwischenraum zwischen der Oberseite des Rotors und des Gehäuses in der Gutflussrichtung ergibt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt eine andere Struktur einer Gutbearbeitungseinheit vor, die in der Gutflussrichtung einen anwachsenden Zwischenraum zwischen der Oberseite des Rotors und dem Rotorgehäuse ermöglicht. Das erfindungsgemäße Gehäuse ist, betrachtet man einen vertikalen Querschnitt entlang der Gehäuseachse, kegelstumpfförmig geformt. Das Rotorgehäuse ist relativ zum Rotor derart angeordnet, dass die Oberseite des Gehäuses von der Rotorachse in der Gutflussrichtung divergiert. Das hat zur Folge, dass der Zwischenraum zwischen dem Rotor und der Oberseite des Rotorgehäuses in der Gutflussrichtung allmählich und kontinuierlich anwächst.

Auf diese Weise erreicht man, dass der anwachsende Zwischenraum zwischen dem Rotor und dem Rotorgehäuse es der Gutmatte ermöglicht, sich zu expandieren, wenn sie sich durch die Gutbearbeitungseinheit bewegt. Dadurch wird die Trennung des Korns vom Stroh unterstützt.

Der radiale Querschnitt des Rotorgehäuses kann kreisförmig oder oval sein. Bei einem kreisförmigen radialen Querschitt kann das Rotorgehäuse um die Gehäuseachse drehen, wie auch der Rotor (in der Regel gegensinnig) um die Rotorachse.

In den Zeichnungen sind vier nachfolgend näher beschriebene Ausführungsbeispiele der Erfindung dargestellt. Es zeigt:
- Fig. 1: eine Seitenansicht eines landwirtschaftlichen Mähdreschers mit einer erfindungsgemäßen Gutbearbeitungseinheit,
- Fig. 2: eine vertikale Querschnittsansicht entlang der Achse des Gehäuses,
- Fig. 3: eine radiale Querschnittsansicht, im Wesentlichen entlang der Linie 3-3 der Figur 2 aufgenommen,
- Fig. 4: eine radiale Querschnittsansicht ähnlich der in Figur 3, in der jedoch eine alternative Ausführungsform dargestellt ist,
- Fig. 5: eine vertikale Querschnittsansicht entlang der Achse des Gehäuses einer anderen Ausführungsform der Erfindung, und
- Fig. 6: eine schematische Seitenansicht einer weiteren Ausführungsform der Erfindung, mit einem rotierenden Gehäuse wie auch einem rotierenden Rotor.

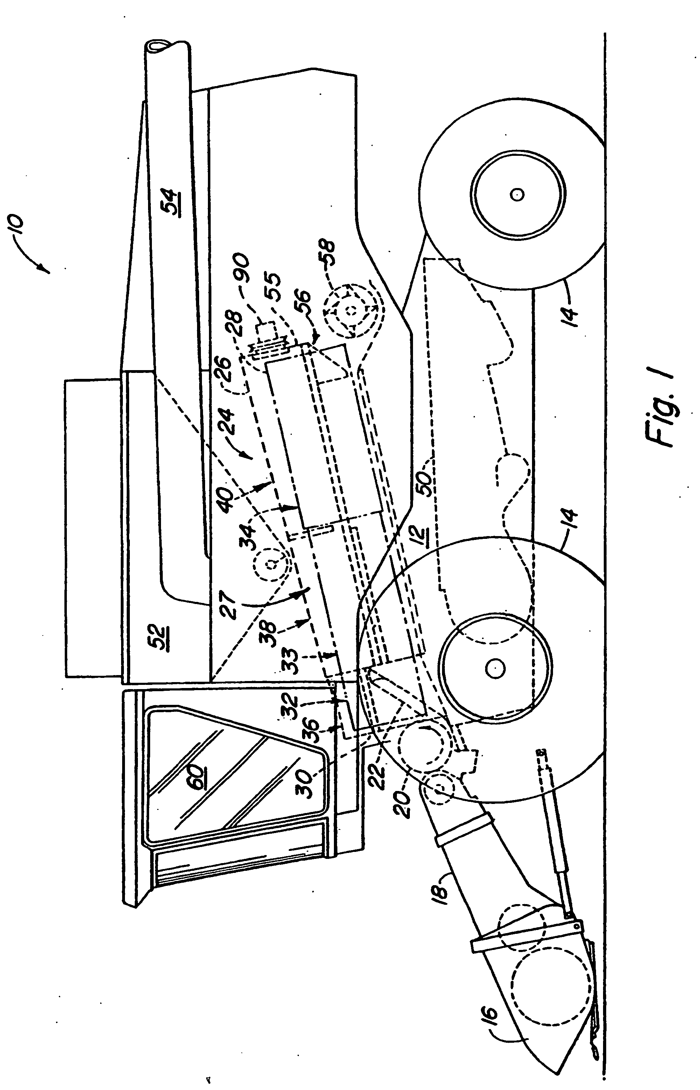

Figur 1 zeigt einen landwirtschaftlichen Mähdrescher 10 mit einer tragenden Struktur 12, die mit im Eingriff mit dem Erdboden stehenden Mitteln 14 versehen ist, die in Form von Reifen dargestellt sind. Anstelle der Reifen können auch Gleisketten verwendet werden. Ein Schneidwerk 16 wird zum Ernten von Gut und um es einem Schrägförderer 18 zuzuführen benutzt. Das geerntete Gut wird durch den Schrägförderer 18 einer Leittrommel 20 zugeführt. Die Leittrommel 20 führt das Gut nach oben einer mit Rotor versehenen Gutbearbeitungseinheit 24 zu. Die Gutbearbeitungseinheit 24 ist zwischen den Seitenwänden des Mähdreschers 10 angeordnet, die einen Teil der tragenden Struktur 12 bilden. Die Gutbearbeitungseinheit 24 umfasst ein Rotorgehäuse 26 und einen im Rotorgehäuse 26 angeordneten Rotor 28. Das geerntete Gut tritt durch einen Einlass 22 am einlassseitigen Ende 20 des Rotorgehäuses 26 in das Rotorgehäuse 26 ein und bewegt sich durch einen ringförmigen Zwischenraum 27 zwischen dem Rotor 28 und dem Rotorgehäuse 26. Der Rotor 28 ist mit einem Einlassbeschickungsabschnitt 32, einem Dreschabschnitt 33 und einem Trennabschnitt 34 ausgestattet. Das Rotorgehäuse 26 hat einen entsprechenden Einlassabschnitt 36, einen Dreschabschnitt 33 und einen Trennabschnitt 40.

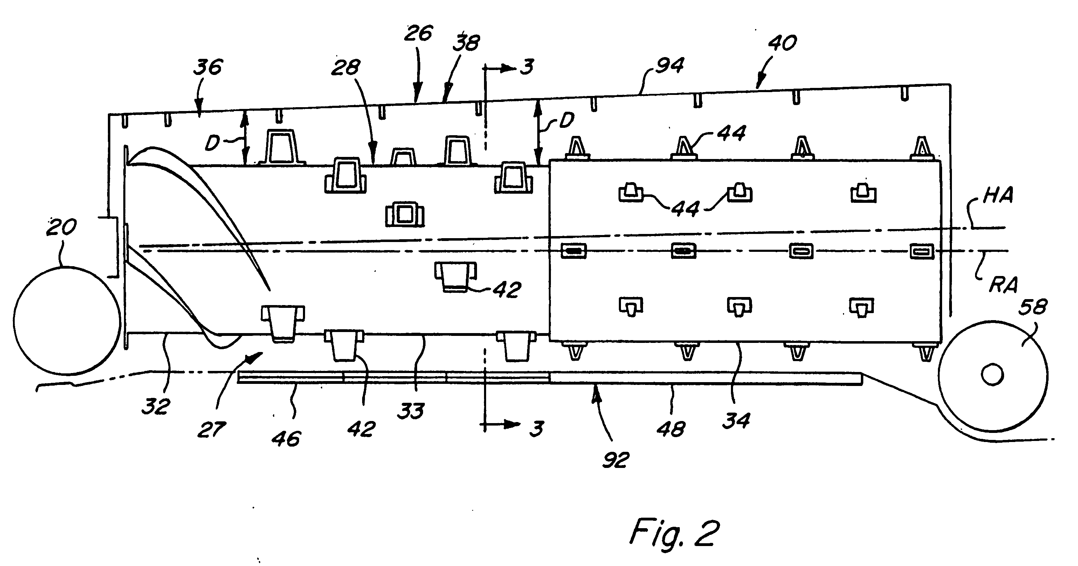

Sowohl der Dreschabschnitt 33 als auch der Trennabschnitt 34 des Rotors 28 sind mit Guteingriffselementen 42 bzw. 44 ausgestattet, die in Figur 2 gezeigt werden. Der Dreschabschnitt 38 des Rotorgehäuses 26 ist mit einem Dreschkorb 46 ausgestattet, während der Trennabschnitt 40 des Rotorgehäuses 26 mit einem Rost 48 versehen ist. Aus der Gutmatte freigesetze Körner und Spreu fallen durch den Dreschkorb 46 und das Rost 48. Der Dreschkorb 46 und das Rost 48 verhindern, dass Gut, das größer als Korn oder Spreu sind, in das Reinigungssystem 50 des Mähdreschers 10 gelangen, das unterhalb der drehbaren Gutbearbeitungseinheit 24 angeordnet ist.

Wie in der Figur 1 gezeigt ist, wird das Korn und die Spreu, die durch den Dreschkorb 46 und das Rost 48 fallen, dem Reinigungssystem 50 zugeführt, welches die Spreu vom Korn trennt. Das saubere Korn wird dann durch einen (nicht gezeigten) Elevator einem Korntank 52 für sauberes Korn zugeführt, aus dem es durch einen Entladeschneckenförderer einem Lastwagen oder Anhänger zugeführt werden kann. Stroh, das das auslassseitige Ende 55 des Rotorgehäuses 26 erreicht, wird durch einen Auslass 56 ausgestoßen und erreicht eine Leittrommel 58. Die Leittrommel 58 stößt das Stroh an der Rückseite des Mähdreschers 10 aus. Das Gut bewegt sich durch die Gutbearbeitungseinheit 24 vom einlassseitigen Ende 30 zum auslassseitigen Ende 55 des Rotorgehäuses 26. Die Steuerung des Betriebs des Mähdreschers 10 erfolgt von einer Bedienerkabine 60 aus.

Der Rotor 28 definiert eine Rotorachse RA, um die der Rotor 28 durch einen Rotorantrieb 90 gedreht wird. Die Rotorachse RA ist eine gerade Linie, die durch die Mitte aller drei Abschnitte des Rotors 28 verläuft. Der Rotor 28 ist im Wesentlichen zylindrisch, jedoch ist der Durchmesser des Rotors 28 nicht über die gesamte Länge des Rotors 28 konstant, wie in der Figur 2 dargestellt ist.

Das Rotorgehäuse 26 definiert eine Gehäuseachse HA. Die Gehäuseachse HA ist eine gerade Linie, die durch alle drei Abschnitte des Rotorgehäuses 26 verläuft. Der Rotor 28 und das Rotorgehäuse 26 sind derart relativ zueinander angeordnet, dass der Boden des Rotors 28 und der Boden 92 des Rotorgehäuses 26 fast parallel zueinander sind, wenn man einen vertikalen Querschnitt entlang der Achsen des Rotors 28 und des Rotorgehäuses betrachtet. Als Ergebnis der konischen Form des Rotorgehäuses 26 divergiert die Oberseite 94 des Rotorgehäuses 26 vom im Wesentlichen zylindrischen Rotor 28 in der Gutflussrichtung. Der Abstand D zwischen dem Rotor 28 und der Oberseite des Rotorgehäuses 26 wächst in jedem Abschnitt des Rotorgehäuses 26 in der Gutflussrichtung allmählich an. Da die unterschiedlichen Abschnitte des Rotors 28 unterschiedliche Durchmesser haben, wird sich der Abstand D am Anfang eines Abschnitts des Rotors 28, wo der Durchmesser sich ändert, abrupt ändern. Wenn es gewünscht wird, kann der Durchmesser des Rotors 28 über die gesamte Länge des Rotors 28 konstant bleiben. In diesem Fall würde der Abstand D über die gesamte Länge des Rotors allmählich ansteigen.

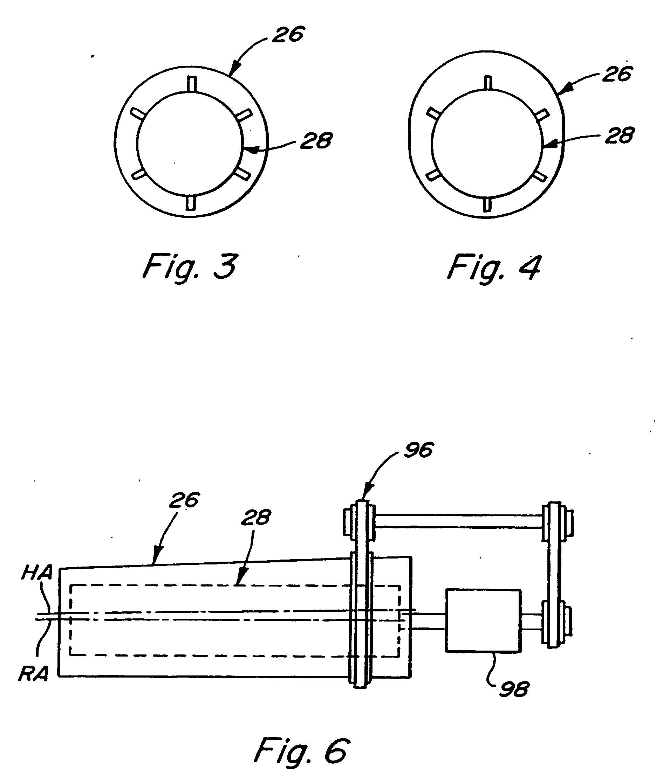

In der Figur 3 ist eine Ausführungsform der Erfindung dargestellt, in der das Rotorgehäuse 26 einen kreisförmigen radialen Querschnitt aufweist. Bei jedem gegebenen radialen Querschnitt wird der Zwischenraum zwischen dem Rotor 28 und dem Rotorgehäuse 28 um den Umfang des Rotors 26 vom Boden zur Oberseite des Rotors 26 allmählich ansteigen. Eine alternative Ausführungsform ist in Figur 4 dargestellt, bei der das Rotorgehäuse 26 im radialen Querschnitt ovalförmig ist. Das ovalförmige Rotorgehäuse 28 ermöglicht es, dass der Zwischenraum zwischen dem Rotor 28 und dem Rotorgehäuse 26 über die untere Hälfte des Umfangs des Rotors 28 konstant bleibt.

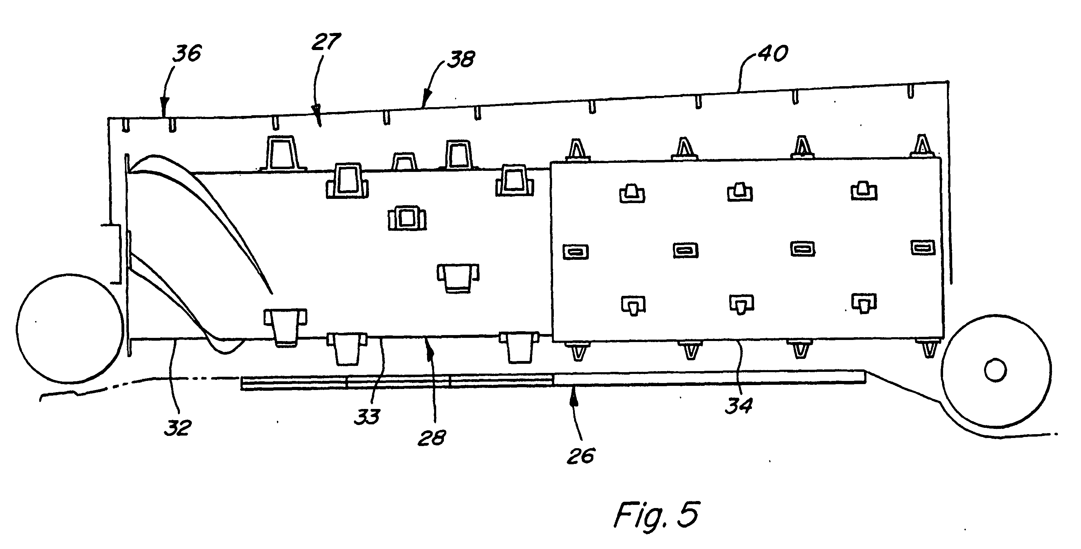

In der Figur 5 ist eine andere Ausführungsform der Erfindung dargestellt. Dort ist das Rotorgehäuse 28 im ganzen Einlassabschnitt 36 zylindrisch. Erst am Anfang des Dreschabschnitts 38 wird das Rotorgehäuse 28 kegelstumpfförmig. Das Rotorgehäuse 28 kann mit einem zylindrischen Beschickungsabschnitt und kegelstumpfförmigen Dresch- und Trennabschnitten versehen sein, wie in Figur 5 gezeigt, oder sowohl der Beschickungs- als auch der Dreschabschnitt können zylindrisch sein, während der Trennabschnitt kegelstumpfförmig ist. Denkbar ist auch, dass das Rotorgehäuse 28 an irgendeiner Stelle der Länge des Gehäuses von einer zylindrischen in eine konische Form übergeht, nicht nur an Übergängen zwischen den Abschnitten.

Eine weitere Ausführungsform der Erfindung ist in der Figur 6 dargestellt. Dort ist ein Gehäuseantrieb 96 bereitgestellt, um das Rotorgehäuse 28 um die Gehäuseachse HA zu drehen, wie auch ein Antrieb 98 zum Drehen des Rotors 28. Im Gegensatz zu den Gutbearbeitungseinheiten, die in den oben genannten US 5 445 563 A und der US 5 688 170 A gezeigt werden, kann das kegelstumpfförmige Rotorgehäuse 28 - wie der Rotor 26 - relativ zur tragenden Struktur 12 des Mähdreschers 10 gedreht werden, in der Regel gegensinnig zum Rotor 26. Ein derartiges Design, wie es in der US 4 274 426 A gezeigt wird, ermöglicht eine größere Flexibilität bei der Einstellung der Betriebsgeschwindigkeit der Gutbearbeitungseinheit 24.

Das kegelstumpfförmige Rotorgehäuse 28 ergibt gemeinsam mit einem zylindrischen Rotor 26 eine Gutbearbeitungseinheit 24, in der der Abstand zwischen dem Rotor 26 und der Oberseite des Rotorgehäuses 28 in der Gutflussrichtung ansteigen kann.

## Patentansprüche

1. Gutbearbeitungseinheit (24) für einen Mähdrescher (10), mit einem um eine Rotorachse (RA) drehbar gelagerten Rotor (28), der innerhalb eines Rotorgehäuses (26) angeordnet ist, wobei zwischen dem Rotorgehäuse (26) und dem Rotor (28) ein ringförmiger Raum vorhanden ist, durch den Gut in einer Gutflussrichtung von einem einlassseitigen Ende (20) des Rotorgehäuses (26) zu einem auslassseitige Ende (55) des Rotorgehäuses (26) stömen kann und das Rotorgehäuse (26) etwa kegelstumpfförmig ist und eine Oberseite (94) aufweist, die in der Gutflussrichtung von der Unterseite (92) des Rotorgehäuses (26) divergiert, **dadurch gekennzeichnet, dass** das Rotorgehäuse (26) derart relativ zum Rotor (28) angeordnet ist, dass der Abstand zwischen dem Rotor (28) und der Oberseite des Rotorgehäuses (26) in der Gutflussrichtung über wenigstens einen Teil der Länge des Rotorgehäuses (26) ansteigt.

2. Gutbearbeitungseinheit (24) nach Anspruch 1, **dadurch gekennzeichnet, dass** das Rotorgehäuse (26), betrachtet man einen vertikalen Querschnitt entlang der Gehäuseachse (HA), kegelstumpfförmig ist.

3. Gutbearbeitungseinheit nach einem der Ansprüche 1 oder 2, **dadurch gekennzeichnet, dass** der radiale Querschnitt des Rotorgehäuses (26) im Wesentlichen kreisförmig ist.

4. Gutbearbeitungseinheit nach einem der Ansprüche 1 oder 2, **dadurch gekennzeichnet, dass** der radiale Querschnitt des Rotorgehäuses (26) im Wesentlichen ovalförmig ist.

5. Gutbearbeitungseinheit (24) nach einem der Ansprüche 1 bis 4, **dadurch gekennzeichnet, dass** das Rotorgehäuse (26) einen Dreschabschnitt (38) aufweist, dem ein Trennabschnitt (40) folgt, und dass die Oberseite (94) des Rotorgehäuses (26) in der Gutflussrichtung im Dreschabschnitt (38) und/oder Trennabschnitt (40) kontinuierlich von der Rotorachse (RA) divergiert.

6. Gutbearbeitungseinheit (24) nach einem der vorhergehenden Ansprüche, **dadurch gekennzeichnet, dass** der Rotor (28) im Wesentlichen zylindrisch ist, und dass sich der Durchmesser des Dreschabschnitts (33) und des Trennabschnitts (34) des Rotors (28) unterscheiden.

7. Gutbearbeitungseinheit (24) nach einem der vorhergehenden Ansprüche, **dadurch gekennzeichnet, dass** das Rotorgehäuse (28) einen Einlassabschnitt (36), einen Dreschabschnitt (38) und einen Trennabschnitt (40) aufweist, dass der Einlassabschnitt (36) des Rotorgehäuses (26) im Wesentlichen zylindrisch ist und dass der Trennabschnitt (40) des Rotorgehäuses (26) kegelstumpfförmig ist und eine Oberseite (94) aufweist, die in der Gutflussrichtung vom Rotor (28) divergiert.

8. Gutbearbeitungseinheit (24) nach einem der vorhergehenden Ansprüche, **dadurch gekennzeichnet, dass** auch das Rotorgehäuse (28) drehbar ist.

## Claims

1. A crop processing unit (24) for a combine harvester (10), with a rotor (28) rotatably mounted about a rotor axis (RA) and arranged within a rotor housing (26), wherein an annular space is present between the rotor housing (26) and the rotor (28), through which space the crop can flow in a crop flow direction from an inlet end (20) of the rotor housing (26) to an outlet end (55) of the rotor housing (26) and the rotor housing (26) is approximately of frustoconical form and has an upper side (94) which diverges from the underside (92) of the rotor housing (26) in the crop flow direction, **characterized in that** the rotor housing (26) is so arranged relative to the rotor (28) that the distance between the rotor (28) and the upper side of the rotor housing (26) increases in the crop flow direction over at least part of the length of the rotor housing (26).

2. A crop processing unit (24) according to claim 1, **characterized in that** the rotor housing (26) is frustoconical as regarded in vertical cross-section along the housing axis (HA).

3. A crop processing unit according to either claim 1 or claim 2, **characterized in that** the radial cross-section of the rotor housing (26) is substantially circular.

4. A crop processing unit according to either claim 1 or claim 2, **characterized in that** the radial cross-section of the rotor housing (26) is substantially oval.

5. A crop processing unit (24) according to any of claims 1 to 4, **characterized in that** the rotor housing (26) has a threshing section (38) followed by a separating section (40), and **in that** the upper side (94) of the rotor housing (26) diverges continuously from the rotor axis (RA) in the crop flow direction in the threshing section (38) and/or the separating section (40).

6. A crop processing unit (24) according to any of the preceding claims,
**characterized in that** the rotor (28) is substantially cylindrical and **in that** the diameters of the threshing section (33) and of the separating section (34) of the rotor (28) are different.

7. A crop processing unit (24) according to any of the preceding claims, **characterized in that** the rotor housing (26) has an inlet section (36), a threshing section (38) and a separating section (40), **in that** the inlet section (36) of the rotor housing (26) is substantially cylindrical and **in that** the separating section (40) of the rotor housing (26) is frustoconical and has an upper side (94) which diverges from the rotor (28) in the crop flow direction.

8. A crop processing unit (24) according to any of the preceding claims, **characterized in that** the rotor housing (26) also can rotate.

## Revendications

1. Dispositif de traitement des récoltes (24) pour une moissonneuse-batteuse (10), comportant un rotor (28), qui est monté rotatif autour d'un axe de rotor (RA) et agencé à l'intérieur d'un carter (26), un espace annulaire étant formé entre le carter du rotor (26) et le rotor (28), à travers lequel la récolte peut affluer dans une direction du flux de récolte à partir d'une extrémité d'entrée (20) du carter (26) vers une extrémité de sortie (55) du carter (26), et le carter (26) étant réalisé en forme de cône tronqué et comportant un côté supérieur (94) qui, dans la direction du flux de récolte, s'écarte de plus en plus du côté inférieur (92) du carter (26), **caractérisé en ce que** le carter (26) est agencé par rapport au rotor (28) de telle sorte que la distance entre le rotor (28) et le côté supérieur (94) du carter (26) augmente dans la direction du flux de récolte au moins sur une partie de la longueur du carter (26).

2. Dispositif de traitement des récoltes (24) selon la revendication 1, **caractérisé en ce que** le carter du rotor (26) est en forme de cône tronqué selon une vue en coupe transversale verticale le long de l'axe du carter (HA).

3. Dispositif de traitement des récoltes selon la revendication 1 ou 2, **caractérisé en ce que** la section radiale du carter du rotor (26) a une forme sensiblement circulaire.

4. Dispositif de traitement des récoltes selon la revendication 1 ou 2, **caractérisé en ce que** la section radiale du carter du rotor (26) a une forme sensiblement ovale.

5. Dispositif de traitement des récoltes (24) selon l'une quelconque des revendications 1 à 4, **caractérisé en ce que** le carter du rotor (26) comporte un tronçon de battage (38) suivi par un tronçon de séparation (40), et **en ce que** le côté supérieur (94) du carter du rotor (26), dans le tronçon de battage (38) et/ou le tronçon de séparation (40), diverge en continu de l'axe du rotor (RA) dans la direction du flux de récolte.

6. Dispositif de traitement des récoltes (24) selon l'une quelconque des revendications précédentes, **caractérisé en ce que** le rotor (28) est sensiblement cylindrique et **en ce que** le diamètre du tronçon de battage (33) et le diamètre du tronçon de séparation (34) du rotor (28) diffèrent.

7. Dispositif de traitement des récoltes (24) selon l'une quelconque des revendications précédentes, **caractérisé en ce que** le carter du rotor (26) comporte un tronçon d'admission (36), un tronçon de battage (38) et un tronçon de séparation (40), **en ce que** le tronçon d'admission (36) du carter du rotor (26) est sensiblement cylindrique et **en ce que** le tronçon de séparation (40) du carter du rotor (26) est en forme de cône tronqué et comporte un côté supérieur (94) qui s'écarte de plus en plus du rotor (28) dans la direction du flux de récolte.

8. Dispositif de traitement des récoltes (24) selon l'une quelconque des revendications précédentes, **caractérisé en ce que** le carter du rotor (26) est également rotatif.
